# EUROPEAN PATENT SPECIFICATION

(11) **EP 2 807 119 B1**
(45) Date of publication and mention of the grant of the patent: **23.11.2016**
(21) Application number: 13713080.3
(22) Date of filing: 23.01.2013
(51) Int. Cl.: C01C 1/00, F01N 3/20

(54) **A METHOD OF REDUCING FRICTION**
ÜBERTRAGUNGSVERFAHREN
PROCÉDÉ DE RÉDUCTION DE LA FRICTION

(30) Priority: 23.01.2012 EP 12000398; 23.01.2012 US 201261589442 P
(43) Date of publication of application: 03.12.2014
(73) Proprietor: Amminex Emissions Technology A/S, 2860 Søborg (DK)
(72) Inventor: QUAADE, Ulrich, J., DK-2880 Bagsværd (DK); MØLLER BORREGAARD, Louise, DK-2100 København Ø (DK)
(74) Representative: Samson & Partner Patentanwälte mbB
(86) International application number: PCT/EP2013/000203
(87) International publication number: WO 2013/110457

(56) References cited:
- EP-A1- 2 305 979
- WO-A1-2010/025948
- WO-A1-2011/038916
- WO-A2-2006/081824
- "Ceramics, Ceramic Processing" In: Ewsuk, K. G.: "Kirk-Othmer Encyclopedia of Chemical Technology", 4 December 2000 (2000-12-04), John Wiley, XP002679651, vol. 5, pages 638-669, * Chapter 4.3 *

## Description

### Field of the Invention

The present invention relates to a method of reducing the friction between a mold and the outer wall of a metal container.

Compacted metal ammine complex salts are an efficient means for storing ammonia and releasing the latter for various purposes, for example consumption by a reductive process such as SCR (selective catalytic reduction) of NOₓ in the exhaust of a combustion engine. Usually, the ammonia is released from the metal ammine complex salt by some source of heat, but other means, such as a vacuum or a chemical agent such as water, may be used as well alone or in combination with heat.

Compacted metal ammine complex salts can be prepared by compaction in a mold piston by means of a piston (see WO 2006/081824). For the sake of a better thermal conductivity of the compacted material, they may also be wrapped into a gas-permeable enclosure made of a flexible, highly heat-conducting material before the compaction (see WO 2011/038916).

The compaction may be effected by uniaxial compaction directly in the metal (e. g. steel or aluminum) container intended for the delivery of ammonia at the site of consumption (see WO 2011/038916). In this case it is advantageous to fit the containers which usually have relatively thin walls snugly in a mold for the compaction step.

It was, however, found that it is rather difficult to remove the metal container from the mold after compaction. Apparently the metal container walls, which are microscopically rough if not treated in a special way, become entangled with the
wall of the mold during the compaction process. This leads to a considerable amount of friction and makes the removal of the container from the mold difficult.

One way to solve this problem is to polish the walls of the metal containers, however this adds to the costs of the container.

It was an aim of the invention to find an inexpensive way to solve the above-addressed problem.

EP 2 305 979 A1 discloses a compaction method for ammonia storage materials by compaction of the material in a container. However, neither a mold in which the container is placed nor lubrication measures are described in that document.

### Summary of the Invention

In a first aspect, the invention relates to a method of reducing the friction between the wall(s) of a mold and the outer wall(s) of a metal container fitting snugly in the mold and containing a material comprising a metal ammine complex salt selected from the group consisting of salts of the general formula:

Mₐ(NH₃)ₙX_{z},

wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAl, K₂Zn, CsCu or K₂Fe; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12; and mixtures thereof. The metal ammine complex salt is uniaxially compacted within the container. The method comprises
a) treating or covering the inner wall(s) of the container with a lubricant before the material comprising the metal ammine complex salt or the material comprising the metal ammine complex salt wrapped into a gas-permeable enclosure made of a flexible material is placed into the container, or
b) mixing a solid lubricant with the material comprising the metal ammine complex salt to be filled into the container, or
c) treating or covering a gas-permeable enclosure made of a flexible material with a lubricant into which the material comprising the metal ammine complex salt is wrapped before the material comprising the metal ammine complex salt wrapped into the enclosure is filled into the container, or
any combination of a), b), and c),
so as to facilitate the removal of the metal container from the mold.

In a second aspect, the invention relates to a metal container filled with a material comprising a metal ammine salt as defined in claim 1 or with said material containing a solid lubricant or with said material wrapped into a gas-permeable enclosure made of a flexible material or with said material wrapped into a gas-permeable enclosure made of a flexible material treated or covered with a lubricant, wherein the inner walls of the metal container are covered with a lubricant.

The material in the container may be non-compacted (condition of the container before compaction of the material) or compacted (condition of the container after compaction of the material).

In a further aspect the invention relates to a gas permeable enclosure made of a flexible material being wrapped around a metal ammine complex salt-containing material, wherein said flexible material is treated or covered with a lubricant.

### Brief Description of the Drawings

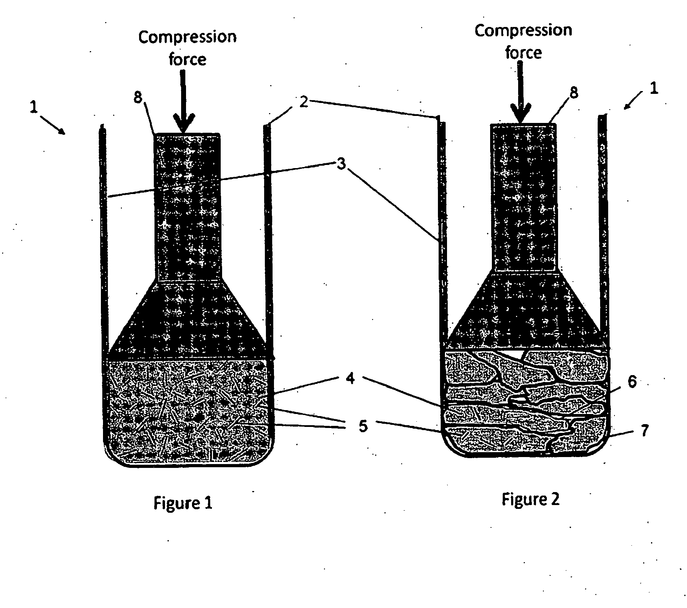

Fig. 1 is a schematic depiction of a compaction process by means of a piston for a metal ammine complex salt directly in a relatively thin-walled container fitting snugly in a mold. The container is treated with a lubricant, and the metal ammine complex salt further optionally contains a solid lubricant.
Fig. 2 is a schematic depiction of another compaction process by means of a piston for a metal ammine complex salt directly in a relatively thin-walled container fitting snugly in a mold. The container is treated with a lubricant, and the metal ammine complex salt is wrapped in gas-permeable enclosure made of a flexible material which may be treated with a lubricant.

### Detailed Description

The particulars shown herein are by way of example and for purposes of illustrative discussion of the embodiments of the present invention as defined by the claims and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description taken with the drawings making apparent to those skilled in the art how the several forms of the present invention may be embodied in practice.

It was surprisingly found that the friction between the outer wall of a non-polished metal container, in which a metal ammine complex salt, optionally wrapped in a gas-permeable enclosure, is uniaxially compacted by means of a piston, and the mold in which the container is fit snugly can be decreased significantly by decreasing the friction between the inner wall of the metal container and the metal ammine complex salt or the enclosure wrapped around it, which facilitates the removal of the container from the mold after compaction significantly. The reason for this surprising fact is not fully understood.

This allows a cheaper production of the containers compared with polishing, while still allowing facile removal from the mold.

The metal containers used in the present invention are usually made of steel or aluminum, but other metals or alloys, such as e.g. iron, titanium or tungsten, may be used.

The thickness of the container walls depends on the material of the container. In the case of steel or aluminum containers it is usually from about 0.25 mm to about 10 mm, preferably from about 0.5 mm to about 5 mm.

The container has a generally cylindrical shape, often with the exception of the bottom and top part, where the edges may be rounded, but other cross-section, such as oval cross-sections, may be used as well. The size of the container is not particularly limited and depends on the size of the final system wherein it is used. in the case, where the content of the container is used on a vehicle as a source of ammonia for SCR of NOₓ, the cylinder may e.g. have a diameter of from 50 to 400 mm and a length of from 200 mm to 800 mm.

The mold may be of any mechanically very stable material known to be used for this purpose by the person skilled in the art, such as polished steel or ceramics.

The piston for exerting the uniaxial compacting force may be made of the same or a similar material.

The metal ammine complex salt which is to be compacted within the container is selected from the group consisting of salts of the general formula:

Mₐ(NH₃)ₙX_{z},

wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAI, K₂Zn, CsCu or K₂Fe; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12, and mixtures thereof.

The alkaline earth and manganese ammine halides, in particular chlorides, and sulphates are particularly preferred.

The metal ammine complex salt may contain additives, e.g. heat conducting flakes, and therefore in the claims and sometimes in the description the term "material comprising a metal ammine complex salt" is used. Otherwise, the term "metal ammine complex salt", except for the case where it is defined by its formula, is used interchangeably with the term "material comprising a metal ammine complex salt".

The metal ammine complex salts may be wrapped in an gas-permeable enclosure made of a highly heat-conducting flexible material having e.g. at least five times the thermal conductivity of the metal ammine complex salt enclosed in it before compaction for providing sufficient thermal conductivity when after compaction the material is heated for releasing ammonia. The flexible material may be, e.g., a metal foil, such as an aluminum foil, but other materials, such as organic polymers, plastics, carbon (e.g. carbon paper) etc. may be used as well.

In the present invention a lubricant is used for reducing the friction between the inner wall of the containers and the material to be compacted within the container.

The lubricant used for lubricating the inner walls of the container, or, as the case may be, for lubricating the flexible material surrounding the metal ammine complex salt to be compacted is preferably selected from solid lubricants, such as graphite, MoS₂, boron nitride, copper grease, talc, calcium fluoride, cerium fluoride, tungsten fluoride, wax emulsion, stearic acid, ammonium stearate, butyl stearate, oleic acid, and organic polymers, such as polytetrafluoroethylene (PTFE), fluorinated ethylene propylene polymer and polyethylene, or mixtures thereof. Graphite, MoS₂ and boron nitride are particularly preferred, and polytetrafluoroethylene or fluorinated ethylene propylene polymer is presently most preferred. Also liquid lubricants can be used, such as oil or grease, e.g. organic or silicon based. Even liquids like water or organic solvents such as ethanol, ethylene glycol etc. have a significant lubricating effect. The thickness of the lubricant layer depends on the particular lubricant used, but should be as thin as possible so as not impede the heat transfer from an outside heat source through the container wall to the metal ammine complex salt when ammonia is released from it.

The solid lubricant which, as the case may be, is mixed with the material comprising a metal ammine complex salt is preferably selected from carbon, e.g. graphite but also lubricating forms of carbon such as carbon nanotubes (CNTs), MoS₂, boron nitride, metal powders, and powders of organic polymers, such as e.g. polyethylene and polytetrafluoroethylene particles, or mixtures thereof. The particle size and amount of solid lubricant mixed with the metal ammine complex salt depend on the specific lubricant. Generally, the particle size may range from about 2 nm to about 100 µm. Also liquid lubricants can be used, such as oil or grease, e.g. organic or silicon based. Even liquids like water or organic solvents such as ethanol, ethylene glycol etc. have significant lubricating effect. The thickness of the lubricant layer typically ranges from about 2 nm to about 0.1 mm.

The application of the lubricant, depending, of course, on the kind of lubricant, may be effected by any method known to the person skilled in the art, e.g. by spray-coating, by a thermal spray process, by contacting it with a solution of the lubricant, by smearing the lubricant onto the inner wall, by electroless plating or by electroplating.

Specific methods for specific lubricants can be found in the examples.

In Figure 1 a cylindrical container 1 having a wall 2 is shown, the inner surface of which is covered with a lubricant 3. A metal ammine complex salt 4 is contained in the container 1. The metal ammine complex salt 4 contains a solid lubricant 5. A compression force is exerted on the content 4, 5 of the container 1 by a piston 8 so as to compact the metal ammine complex salt 4 containing the solid lubricant 5.

In Figure 2 a cylindrical container 1 having a wall 2 is shown, the inner surface of which is covered with a lubricant 3. A metal ammine complex salt 4 is contained in the container 1, which optionally may contain a solid lubricant 5. The metal ammine complex salt 4 optionally containing the solid lubricant 5 is wrapped in a gas-permeable enclosure 6 made of a flexible heat-conducting material. The gas-permeable enclosure 6 is lubricated with a lubricant 7. A compression force is exerted on the metal ammine complex salt 4 containing the solid lubricant 5 and wrapped in the lubricated 7 gas-permeable enclosure 6 by a piston 8 so as to compact the metal ammine complex salt 4 containing the solid lubricant 5.

The following examples illustrate the invention without limiting it thereto.

### Examples

### Example 1: Lubrication of the inner wall of a cylindrical steel container and compacting powdery metal ammine salt

**1A)** A cylindrical steel container having a height of 100 mm, a diameter of 100 mm and a wall thickness of 2 mm was filled with 200 g of powdery Sr(NH₃)₈Cl₂ and fit snugly in a mold for high-pressure compaction made of polished steel (EN S355J0 (ST 52-3)). The powder is uniaxally compacted with a force which is increased from initially 20 tons (1.96·10⁵ N), which translates into a pressure of 25 MPa, to a final force of 190 tons (1.87·10⁶ N), which translates into a pressure of 240 MPa. It was difficult to remove the container from the mold.
**1B)** The inner wall of each of three cylindrical steel containers having a height of 100 mm, a diameter of 100 mm and a wall thickness of 2 mm was lubricated
   a) by smearing copper grease (CU 1100, Pr. Nb. 852386) onto the inner wall (estimated thickness of the copper grease layer: roughly 1 µm to 1 mm);
   b) by spraying a graphite aerosol spray onto the inner wall (Graphite, colloidal, lubricant aerosol spray from Alpha Aesar (41775)); spraying time for the whole inner wall: about 2-5 s, drying time: about 30-60 s, estimated thickness of the resulting graphite layer: roughly 100 nm-100 µm), or, respectively,
   c) by dip-coating fluorinated ethylene propylene polymer (DuPont™ FEP dispersionTE-9568 (fluoropolymer resin colloid in water)) onto the inner wall (estimated thickness of the resulting fluoropolymer layer: roughly 2 µm).

Then each container was filled with 200 g of powdery Sr(NH₃)₈Cl₂ and fit snugly in a mold for high-pressure compaction made of polished steel (EN S355J0 (ST 52-3)). The powder is uniaxally compacted with a force which is increased from initially 20 tons (1.96·10⁵ N), which translates into a pressure of 25 MPa, to a final force of 190 tons (1.87·10⁶ N), which translates into a pressure of 240 MPa. It was much easier to remove the containers from the mold than in the above comparative example 1A.

### Example 2: Lubrication of the inner wall of a cylindrical steel container and compacting metal ammine salt contained in an enclosure made of aluminum

**2A1)** A cylindrical steel container having a height of 500 mm, a diameter of 172 mm and a wall thickness of 3 mm was filled with 130 packs of 100 g of Sr(NH₃)₈Cl₂ wrapped in aluminum foil and fit snugly in a mold for high-pressure compaction made of polished steel (EN S355J0 (ST 52-3). The packs containing the Sr(NH₃)₈Cl₂ in the container are uniaxally compacted in eight compaction steps each with a force of 350 tons (3.44·10⁶ N), which translates into a pressure of 148 MPa. It was very difficult to remove the container from the mold.
**2B1)** The inner wall of each of three cylindrical steel containers having a height of 500 mm, a diameter of 172 mm and a wall thickness of 3 mm was lubricated
   a) by smearing copper grease (CU 1100, Pr. Nb. 852386) onto the inner wall (estimated thickness of the copper grease layer: roughly 1 µm-1 mm);
   b) by spraying a graphite aerosol spray onto the inner wall (Graphite, colloidal, lubricant, aerosol spray from Alpha Aesar (41775)); spraying time for the whole inner wall: about 2-5 s, drying time: about 30-60 s, estimated thickness of the resulting graphite layer: roughly 100 nm-100 µm), or, respectively,
   c) by dip-coating fluorinated ethylene propylene polymer (DuPont™ (DuPont™ FEP dispersionTE-9568 (fluoropolymer resin colloid in water))) onto the inner wall (estimated thickness of the resulting fluoropolymer layer: roughly 2 µm).

   Then each container was filled with 130 packs of 100 g of Sr(NH₃)₈Cl₂ wrapped in aluminum foil and fit snugly in a mold for high-pressure compaction made of polished steel (EN S355J0 (ST 52-3 )). The packs containing the Sr(NH₃)₈Cl₂ in the container are uniaxally compacted in eight compaction steps each with a force of 350 tons (3.44·10⁶ N), which translates into a pressure of 148 MPa. It was much easier to remove the containers from the mold than in the above comparative example 2A1.
**2A2)** A cylindrical steel container having a height of 360 mm, a diameter of 115 mm and a wall thickness of 1.0 mm was filled with 42 packs of 100 g of Sr(NH₃)₈Cl₂ wrapped in aluminum foil and fit snugly in a mold for high-pressure compaction made of polished steel (EN S355J0 (ST 52-3). The packs containing the Sr(NH₃)₈Cl₂ in the container are uniaxally compacted in 21 compaction steps each with a force of 110 tons (1.08·10⁶ N) which translates into a pressure of 104 MPa, to a final density of 1.2 g/ml. The force needed to remove the container from the compaction mold was 22 tons (2.16·10⁵ N).
**2B2)** The inner wall of a steel containers having a height of 360 mm, a diameter of 115 mm and a wall thickness of 1.0 mm was lubricated by dip-coating fluorinated ethylene propylene polymer (DuPont™ FEP dispersionTE-9568 (fluoropolymer resin colloid in water))) onto the inner wall (estimated thickness of the resulting fluoropolymer layer: roughly 2 µm).

Then the container was filled with 42 packs of 100 g of Sr(NH₃)₈Cl₂ wrapped in aluminum foil and fit snugly in a mold for high-pressure compaction made of polished steel (EN S355J0 (ST 52-3 )). The packs containing the Sr(NH₃)₈Cl₂ in the container are uniaxally compacted in 6 compaction steps each with a force of 120 tons (1.18·10⁶ N), which translates into a pressure of 113 MPa, to a final density of 1.2 g/ml. The force needed to remove the container from the compaction mold was 14 tons (1.37·10⁵ N).

### Example 3: Addition to lubricant to the metal ammine complex salt to be compacted

**3A)** A cylindrical steel container having a height of 100 mm, a diameter of 100 mm and a wall thickness of 2 mm was filled with 200 g of powdery Sr(NH₃)₈Cl₂ and fit snugly in a mold for high-pressure compaction made of polished steel (EN S355J0 (ST 52-3)). The powder is uniaxally compacted with a force which is increased from initially 20 tons (1.96·10⁵ N), which translates into a pressure of 25 MPa, to a final force of 190 tons (1.87·10⁶ N), which translates into pressure of 240 MPa. It was difficult to remove the container from the mold.
**3B)** Another cylindrical steel container having a height of 100 mm, a diameter of 100 mm and a wall thickness of 2 mm was filled with 200 g of powdery Sr(NH₃)₈Cl₂, which had been mixed with 0.25 % by weight graphite (Graphite flake, natural, 10 mesh, 99.9 %), and fit snugly in a mold for high-pressure compaction made of polished steel (EN S355J0 (ST 52-3)). The powder is uniaxally compacted with a force which is increased from initially 20 tons (1.96·10⁵ N), which translates into a pressure of 25 MPa, to a final force of 190 tons (1:87·10⁶ N), which translates into a pressure of 240 MPa. It was much easier to remove the container from the mold than in the above comparative example 3A.

### Example 4: Lubrication of flexible heat-conducting material contained in an enclosure surrounding metal ammine complex salt to be compacted

4A) A cylindrical steel container having a height of 500 mm, a diameter of 172 mm and a wall thickness of 3 mm was filled with 130 packs of 100 g of Sr(NH₃)₈Cl₂ wrapped in aluminum foil and fit snugly in a mold for high-pressure compaction made of polished steel (EN S355J0 (ST 52-3)). The packs containing the Sr(NH₃)₈Cl₂ in the container are uniaxally compacted in eight compaction steps each with a force of 350 tons (3.44·10⁶ N), which translates into a pressure of 148 MPa. It was very difficult to remove the container from the mold.
**4B)** A cylindrical steel container having a height of 500 mm, a diameter of 172 mm and a wall thickness of 3 mm was filled with 130 packs of 100 g of Sr(NH₃)₈Cl₂ wrapped in Tri-Foil^{®}, which is an foil made from aluminium that has been coated on one side with Teflon^{®}. The Teflon^{®} side is chosen as the outside of the packs and the packs are therefore lubricated.

The container is fit snugly in a mold for high-pressure compaction made of polished steel (EN S355J0 (ST 52-3)). The packs containing the Sr(NH₃)₈Cl₂ in the container are uniaxally compacted in eight compaction steps each with a force of 350 tons (3.44·10⁶ N), which translates into a pressure of 148 MPa. It was much easier to remove the container from the mold than in the above comparative example 4A.

Any of the lubricating methods of Examples 1, 2, 3 and 4 may be combined.

## Claims

1. A method of reducing the friction between the wall(s) of a mold and the outer wall(s) of a metal container fitting snugly in the mold and containing a material comprising a metal ammine complex salt selected from the group consisting of salts of the general formula:
Mₐ(NH₃)ₙX_{z},
wherein M is one or more cations selected from the group consisting of alkali metals, such as Li, Na, K or Cs, alkaline earth metals, such as Mg, Ca, Ba or Sr, aluminium and transition metals, V, Cr, Mn, Fe, Co, Ni, Cu or Zn or combinations of said metals, such as NaAl, KAI, K₂Zn, CsCu or K₂Fe; X is one or more anions selected from the group consisting of fluoride, chloride, bromide, iodide, nitrate, thiocyanate, sulphate, molybdate and phosphate ions; a is the number of cations per salt molecule; z is the number of anions per salt molecule; and n is the coordination number of 2 to 12; and mixtures thereof, which is uniaxially compacted within the container,
wherein the method comprises
a) treating or covering the inner wall(s) of the container with a lubricant before the material comprising the metal ammine complex salt or the material comprising the metal ammine complex salt wrapped into a gas-permeable enclosure made of a flexible material is placed into the container, or
b) mixing a solid lubricant with the material comprising the metal ammine complex salt to be filled into the container, or
c) treating or covering a gas-permeable enclosure made of a flexible material with a lubricant into which the material comprising the metal ammine complex salt is wrapped before the material comprising the metal ammine complex salt wrapped into the enclosure is filled into the container, or
any combination of a), b), and c),
so as to facilitate the removal of the metal container from the mold.

2. The method of claim 1, wherein said lubricant is selected from the group consisting of graphite, MoS₂, boron nitride, copper grease, talc, calcium fluoride, cerium fluoride, tungsten fluoride, wax emulsion, stearic acid, ammonium stearate, butyl stearate, oleic acid, polytetrafluoroethylene, fluorinated ethylene propylene polymer and polyethylene, or mixtures thereof.

3. The method of claim 1 or 2, wherein said solid lubricant is selected from the group consisting of graphite, MoS₂, boron nitride, copper grease and polytetrafluoroethylene or mixtures thereof.

4. The method of any of claims 1 to 3, wherein said inner wall of the container or the enclosure is treated or covered with said lubricant by spray-coating, by a thermal spray process, by contacting it with a solution of the lubricant; by smearing the lubricant onto the inner wall, by electroless plating or by electroplating.

5. The method of any of claims 1 to 4, wherein the metal container is a steel or aluminum container and the wall thickness of the container is from about 0.25 mm to about 10 mm, preferably from about 0.5 mm to about 5 mm.

6. A metal container filled with a material comprising a metal ammine complex salt as defined in claim 1 or with said material containing a solid lubricant or with said material wrapped into a gas-permeable enclosure made of a flexible material or with said material wrapped into a gas-permeable enclosure made of a flexible material treated or covered with a lubricant, wherein the inner walls of the metal container are covered with a lubricant.

7. The metal container of claim 6, wherein said material is compacted.

8. The metal container of claim 6 or 7, wherein the lubricant is selected from the group consisting of graphite, MoS₂, boron nitride, copper grease, talc, calcium fluoride, cerium fluoride, tungsten fluoride, wax emulsion, stearic acid, ammonium stearate, butyl stearate, oleic acid, polytetrafluoroethylene, fluorinated ethylene propylene polymer and polyethylene, or mixtures thereof.

9. A gas permeable enclosure made of a flexible material being wrapped around a metal ammine complex salt-containing material, wherein said flexible material is treated or covered with a lubricant.

10. The gas permeable enclosure of claim 9, wherein said lubricant is selected from the group consisting of graphite, MoS₂, boron nitride, copper grease, talc, calcium fluoride, cerium fluoride, tungsten fluoride, wax emulsion, stearic acid, ammonium stearate, butyl stearate, oleic acid, polytetrafluoroethylene, fluorinated ethylene propylene polymer and polyethylene, or mixtures thereof.

## Patentansprüche

1. Verfahren zur Verringerung der Reibung zwischen der Wand oder den Wänden einer Form und der Außenwand oder den Außenwänden eines Metallbehälters, der genau in die Form passt und ein Material enthält, welches ein Metallamminkomplex-Salz umfasst, das ausgewählt ist aus der Gruppe bestehend aus Salzen der allgemeinen Formel:
Mₐ(NH₃)ₙX_{z},
in der M für ein oder mehrere Kationen steht, die ausgewählt sind aus der Gruppe bestehend aus Alkalimetallen, wie Li, Na, K oder Cs, Erdalkalimetallen, wie Mg, Ca, Ba oder Sr, Aluminium und Übergangsmetallen, V, Cr, Mn, Fe, Co, Ni, Cu oder Zn, oder Kombinationen dieser Metalle, wie NaAl, KAl, K₂Zn, CsCu oder K₂Fe; X für ein oder mehrere Anionen steht, die ausgewählt sind aus der Gruppe bestehend aus Fluorid-, Chlorid-, Bromid-, Iodid-, Nitrat-, Thiocyanat-, Sulfat-, Molybdat- und Phosphationen; a die Zahl der Kationen pro Salzmolekül ist; z die Zahl der Anionen pro Salzmolekül ist; und n die Koordinationszahl von 2 bis 12 ist; und deren Mischungen, das uniaxial in dem Behälter kompaktiert wird,
wobei das Vorfahren umfasst:
a) Behandeln oder Bedecken der Innenwand oder der Innenwände des Behälters mit einem Schmiermittel, bevor das Material, welches das Metallamminkomplex-Salz umfasst, oder das Material, das ein in eine gasdurchlässige Umhüllung aus einem flexiblen Material eingewickeltes Metallamminkomplex-Salz umfasst, in den Behälter gegeben wird oder,
b) Mischen eines festen Schmiermittels mit dem Material, welches das in den Behälter zu füllende Metallamminkomplex-Salz umfasst, oder
c) Behandeln oder Bedecken einer gasdurchlässigen Umhüllung aus einem flexiblen Material mit einem Schmiermittel, in welches das Material, das das Metallamminkomplex-Salz umfasst, gewickelt wird, bevor das umwickelte Material, welches das in die Umhüllung eingewickelte Metallamminkomplex-Salz umfasst, in den Behälter gegeben wird, oder
irgendeine Kombination von a), b) und c),
um die Entfernung des Metallbehälters aus der Form zu erleichtern.

2. Verfahren nach Anspruch 1, bei dem das Schmiermittel ausgewählt ist aus der Gruppe bestehend aus Graphit, MoS₂, Bornitrid, Kupferfett, Talk, Calciumfluorid, Cerfluorid, Wolframfluorid, Wachsemulsion, Stearinsäure, Ammoniumstearat, Butylstearat, Ölsäure, Polytetrafluorethylen, fluoriertem Ethylen-Propylen-Polymer und Polyethylen oder deren Mischungen.

3. Verfahren nach Anspruch 1 oder 2, bei dem das feste Schmiermittel ausgewählt ist aus der Gruppe bestehend aus Graphit, MoS₂, Bornitrid, Kupferfett und Polytetrafluorethylen oder deren Mischungen.

4. Verfahren nach irgendeinem der Ansprüche 1 bis 3, bei dem die Innenwand des Behälters oder die Umhüllung durch Sprühbeschichtung, durch ein thermisches Sprühverfahren, durch Kontaktieren derselben mit einer Lösung des Schmiermittels, durch Schmieren des Schmiermittels auf die Innenwand, durch stromlose Abscheidung oder durch Galvanisieren mit dem Schmiermittel behandelt oder bedeckt wird.

5. Verfahren nach irgendeinem der Ansprüche 1 bis 4, bei dem der Metallbehälter ein Stahl- oder Aluminiumbehälter ist und die Wanddicke dieses Behälters etwa 0,25 mm bis etwa 10 mm, vorzugsweise etwa 0,5 mm bis etwa 5 mm beträgt.

6. Metallbehälter, gefüllt mit einem Material, das ein wie in Anspruch 1 definiertes Metallamminkomplex-Salz umfasst, oder mit dem Material, das ein festes Schmiermittel enthält, oder mit dem Material, das in eine gasdurchlässige Umhüllung aus einem flexiblen Material eingewickelt ist, oder mit dem Material, das in eine gasdurchlässige Umhüllung aus einem mit einem Schmiermittel behandelten oder bedeckten flexiblen Material eingewickelt ist, wobei die Innenwände des Metallbehälters mit einem Schmiermittel bedeckt sind.

7. Metallbehälter nach Anspruch 6, bei dem das Material kompaktiert ist.

8. Metallbehälter nach Anspruch 6 oder 7, bei dem das Schmiermittel ausgewählt ist aus der Gruppe bestehend aus Graphit, MoS₂, Bornitrid, Kupferfett, Talk, Calciumfluorid, Cerfluorid, Wolframfluorid, Wachsemulsion, Stearinsäure, Ammoniumstearat, Butylstearat, Ölsäure, Polytetrafluorethylen, fluoriertem Ethylen-Propylen-Polymer und Polyethylen oder deren Mischungen.

9. Gasdurchlässige Umhüllung aus einem flexiblen Material, die um ein ein Metallamminkomplex-Salz enthaltendes Material gewickelt ist, wobei das flexible Material mit einem Schmiermittel behandelt oder bedeckt ist.

10. Gasdurchlässige Umhüllung nach Anspruch 9, bei dem das Schmiermittel ausgewählt ist aus der Gruppe bestehend aus Graphit, MoS₂, Bornitrid, Kupferfett, Talk, Calciumfluorid, Cerfluorid, Wolframfluorid, Wachsemulsion, Stearinsäure, Ammoniumstearat, Butylstearat, Ölsäure, Polytetrafluorethylen, fluoriertem Ethylen-Propylen-Polymer und Polyethylen oder deren Mischungen.

## Revendications

1. Procédé de réduction de la friction entre la ou les paroi(s) d'un moule et la ou les paroi(s) extérieure(s) d'un récipient métallique s'insérant parfaitement à l'intérieur du moule et contenant un matériau qui comprend un sel complexe d'une amine métallique sélectionné parmi le groupe constitué de sels de la formule générale :
Mₐ(NH₃)ₙX_{z},
dans laquelle M représente une ou plusieurs cations sélectionnés parmi le groupe constitué de métaux alcalins, tels que Li, Na, K ou Cs, de métaux alcalino-terreux, tels que Mg, Ca, Ba ou Sr, d'aluminium et de métaux de transition, V, Cr, Mn, Fe, Co, Ni, Cu, ou Zn ou des combinaisons desdits métaux, telles que NaAl, KAI, K₂Zn, CsCu ou K₂Fe, X représente un ou plusieurs anions sélectionnés parmi le groupe constitué d'ions de fluorure, chlorure, bromure, iodure, nitrate, thiocyanate, sulfate, molybdate et de phosphate, a représente le nombre de cations par molécule de sel, z représente le nombre d'anions par molécule de sel et n représente l'indice de coordination de 2 à 12, et des mélanges de ceux-ci, matériau qui est compacté de façon uniaxiale au sein du récipient,
le procédé comprenant les étapes consistant
a) à traiter la ou les paroi(s) intérieures du récipient au moyen d'un lubrifiant ou à la/les recouvrir d'un lubrifiant avant l'introduction du matériau comprenant le sel d'amine métallique ou le matériau comprenant le sel d'amine métallique enfermé dans une enceinte perméable aux gaz constituée d'un matériau souple à l'intérieur du récipient, ou
b) à mélanger un lubrifiant solide avec le matériau comprenant le sel complexe d'amine métallique devant être introduit dans le récipient, ou
c) à traiter au moyen d'un lubrifiant ou à recouvrir d'un lubrifiant une enceinte perméable aux gaz constituée d'un matériau souple dans lequel le sel complexe d'amine métallique est enveloppé avant l'introduction dans le récipient dudit matériau comprenant le sel complexe d'amine métallique enveloppé dans ladite enceinte, ou
à combiner les étapes a), b), et c),
de manière à faciliter le détachement du récipient métallique du moule.

2. Procédé suivant la revendication 1, dans lequel ledit lubrifiant est sélectionné parmi le groupe constitué de graphite, MoS₂, nitrure de bore, graisse au cuivre, talc, fluorure de calcium, fluorure de cérium, fluorure de tungstène, d'mulsion de cire, acide stéarique, stéarate d'ammonium, stéarate de butyle, acide oléique, polytetrafluoréthylène, polymer d'éthylène-propylène fluoré ou de mélanges de ceux-ci.

3. Procédé suivant la revendication 1 ou 2, dans lequel ledit lubrifiant solide est sélectionné parmi le groupe constitué de graphite, MoS₂, nitrure de bore, graisse au cuivre et polytetrafluoréthylène ou de mélanges de ceux-ci.

4. Procédé suivant une quelconque des revendications 1 à 3, dans lequel ladite paroi intérieure du récipient ou de l'enceinte est traitée au moyen dudit lubrifiant ou recouverte dudit lubrifiant par pulvérisation, par un procédé de projection thermique, par la mise en contact de la paroi intérieure avec une solution du lubrifiant, par enduction de la paroi intérieure avec le lubrifiant, par placage sans électrolyse ou par électrodéposition.

5. Procédé suivant une quelconque des revendications 1 à 4, dans lequel le récipient métallique est un récipient en acier ou en aluminium et l'épaisseur de paroi du récipient se situe dans la plage de 0,25 mm à 10 mm environ, de préférence de 0,5 mm à 5 mm environ.

6. Récipient métallique rempli d'un matériau comprenant un sel d'une amine métallique suivant la revendication 1 ou dudit matériau contenant un lubrifiant solide ou dudit matériau enfermé dans une enceinte perméable aux gaz constituée d'un matériau souple ou dudit matériau enfermé dans une enceinte perméable aux gaz constituée d'un matériau souple ou dudit matériau enfermé dans une enceinte perméable aux gaz constituée d'un matériau souple traitée au moyen d'un lubrifiant ou recouverte d'un lubrifiant, les parois intérieures du récipient métallique étant recouvertes d'un lubrifiant.

7. Récipient métallique suivant la revendication 6, ledit matériau étant compacté.

8. Récipient suivant la revendication 6 ou 7, le lubrifiant étant sélectionné parmi le groupe constitué de graphite, MoS₂, nitrure de bore, graisse au cuivre, talc, fluorure de calcium, fluorure de cérium, fluorure de tungstène, d'mulsion de cire, acide stéarique, stéarate d'ammonium, stéarate de butyle, acide oléique, polytetrafluoréthylène, polymer d'éthylène-propylène fluoré ou de mélanges de ceux-ci.

9. Enceinte perméable aux gaz constituée d'un matériau souple enveloppant un matériau contenant un sel complexe d'une amine métallique, ledit matériau souple étant traité au moyen d'un lubrifiant ou recouvert d'un lubrifiant.

10. Enceinte perméable aux gaz suivant la revendication 9, ledit lubrifiant étant sélectionné parmi le groupe constitué de graphite, MoS₂, nitrure de bore, graisse au cuivre, talc, fluorure de calcium, fluorure de cérium, fluorure de tungstène, d'mulsion de cire, acide stéarique, stéarate d'ammonium, stéarate de butyle, acide oléique, polytetrafluoréthylène, polymer d'éthylène-propylène fluoré ou de mélanges de ceux-ci.
